# EUROPEAN PATENT SPECIFICATION

(11) **EP 0 389 017 B1**
(45) Date of publication and mention of the grant of the patent: **14.12.1994**
(21) Application number: 90200457.1
(22) Date of filing: 27.02.1990
(51) Int. Cl.: C08J 9/40, C08J 9/42, B29C 67/20, B32B 5/18

(54) **Method for manufacturing an element with a synthetic foam layer and element obtained by that method**
Verfahren zum Herstellen eines Kunstharzschaum enthaltenden Schichtelementes und das auf diese Weise erhaltene Element
Procédé de réalisation d'un élément contenant une couche de mousse et élément produit par ce procédé

(30) Priority: 23.03.1989 BE 8900324
(43) Date of publication of application: 26.09.1990
(73) Proprietor: ASTECHNOLOGIES, INC., Roswell, Georgia 33977 (US)
(72) Inventor: De Ruyver, Stefaan, B-9270 Laarne (BE); Debaes, Bernard, B-8340 Damme-Sijsele (BE); Joos, Patrick, B-9219 Gentbrugge (BE); Van Doorsselaere, Christiaan, B-9140 Zele (BE)
(74) Representative: Callewaert, Jean

(56) References cited:
- FR-A- 2 540 427
- GB-A- 2 045 684
- GB-A- 2 096 653
- US-A- 4 718 153
- CHEMICAL ABSTRACTS, vol. 109, no. 18, 31st October 1988, page 74, abstract no. 151067x, Columbus, Ohio, US; & JP-A-63 135 240

## Description

The invention relates to a method for manufacturing an element having a synthetic foam layer as defined in the preamble of claim 1.

Such a method is disclosed in FR-A-2 540 427. In this known method, the finishing layer is applied directly onto the impregnated foam layer. This finishing layer is in particular composed of a textile covering.

A drawback of the known method is that the impregnation liquid may bleed through towards the covering or finishing layer, especially when the core of the synthetic foam is covered with a moist permeable textile covering. This drawback also involves a high lost percentage of product.

The invention provides a unique method which not only provides a solution for the above mentioned drawback but which shows moreover a number of important additional advantages which will be described more into detail hereinafter.

The method according to the invention is characterized in that a protection foil, which is substantially impermeable for the liquid comprising NCO-groups, is applied between the synthetic foam layer and the finishing layer, before introducing the steam into the impregnated layer, which protection foil becomes steam-permeable by the action thereupon of the steam, said steam being introduced in the impregnated layer towards said protection foil on the side of the impregnated layer opposite said protection foil.

Due to this particular flow direction of the steam, the impregnation liquid containing NCO-groups first reacts with the steam before the protection foil is made permeable by this steam The particular direction of the flow of steam results in substantially no impregnation liquid penetrating into the finishing layer after dissolution of the protection foil.

The use of a protection foil between the impregnated layer and the finishing layer is known per se from GB-A-2 096 653. This British patent application discloses a method for reinforcing flexible open cell materials, wherein this material is impregnated with a liquid containing NCO-groups and subsequently sprinkled with water. Then the obtained complex is shaped between a heated dies. In this way, the protection foil is molten by conductive heat.

Such a method, wherein no use is made of steam, shows however also a number of fundamental drawbacks. As soon as the preimpregnated foam is sprinkled with water, the potlife thereof is very short. It is thus impossible to process a stock of partially finished products, whereon for example only a specific decorative outlayer, in function of the choice of the client, has to be applied at the moment of the furnishing. In the present trend of just in time delivering this is certainly very important.

Further during the sprinkling of the water, the reaction with the NCO-groups is partially started before the other layers can be applied. This can then also lead to partial delaminations and/or insufficient adhesion of the different layers.

Another drawback of those methods is that the necessary heat for the reaction between the water and the NCO-groups has to be supplied by conduction starting from the outer surface of the element to be manufactured. Due to this, the temperature of the outer surface is often very high, so that a sufficient heat transfer to the core can be realised, in an economical cycle time. Heat sensitive textiles such as velvet can therefore often not be used for the finishing layer. This means then also that with such a heating technique, the thickness of the element has to be relatively limited.

In a particular embodiment of the invention, said whole of different superimposed layers is submitted to a moulding and/or lamination during or before said steam penetration.

Other particularities and advantages of the invention will become clear from the description given hereunder of some particular embodiments of the method and of elements obtained by application of the method according to the invention ;
the references used hereafter relate to the figures.

Figure 1 is a schematic cross-section of a part of a particular embodiment of an element obtained by application of the method according to the invention, however before it was submitted to the action of the steam.

Figure 2 is a schematic representation of one of the most important steps of a first embodiment of the method according to the invention.

Figure 3 is in a certain way an analogous representation of the same step according to a second embodiment of a method according to the invention.

In the different figures, the same references relate to the same or analogous elements.

The method, according to the invention, for manufacturing an element constituted of several layers and having a synthetic foam layer, which is preferably submitted to a well determined design generally comprises the following successive steps :
1°) the impregnation of a flexible synthetic foam layer, for example polyurethane foam, with a liquid comprising NCO-groups ;
2°) the possible supply of a reinforcement layer on both sides of the synthetic foam layer, such as for example glass fibers, non-woven glass fiber mats or glass fiber fabrics ;
3°) the possible application of a protection foil of a thermoplastic synthetic material in order to avoid the bleed through of chemicals, more particularly of the liquid comprising NCO-groups, whereby that synthetic material shows adhesive properties in a molten or partially molten state, in such a manner that this one can act as an adhesion layer in that status, allowing the surrounding layers to stick to each other.
4°) the application of a finishing layer on at least one of the sides of the synthetic foam layer, which is for example formed by a textile fabric allowing the penetration of steam :
5°) the compression of the whole constituted of the different layers by the action of steam at such a temperature and during a sufficient time that, on the one hand, the possibly present synthetic foil can at least partially melt, and on the other hand, the liquid comprising NCO-groups can react with the steam for forming a flexible or not polymer in the synthetic foam layer.

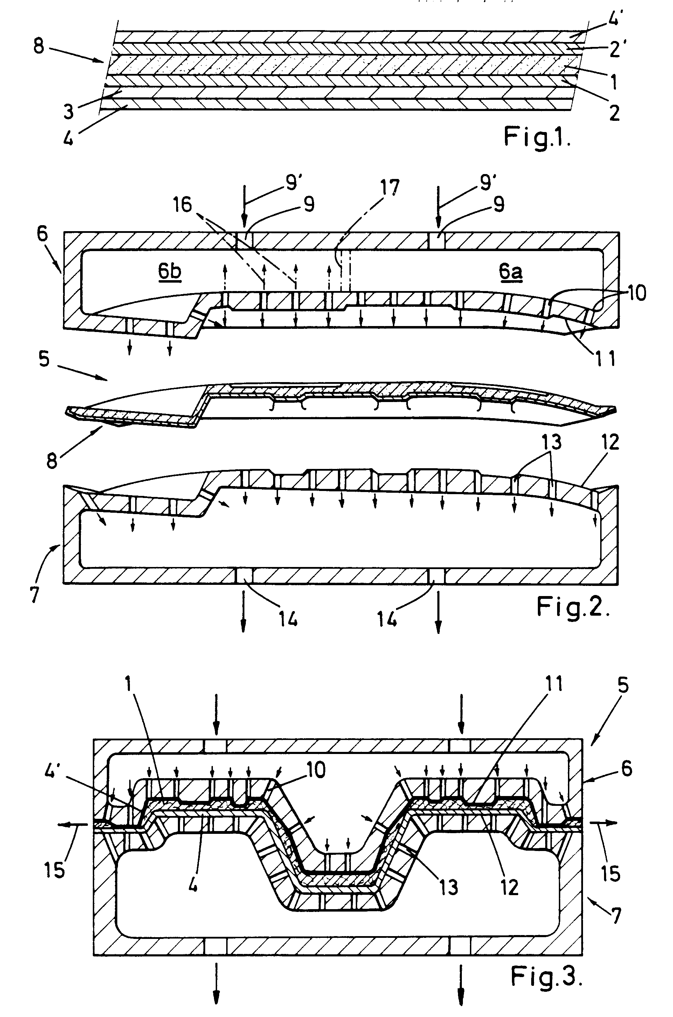

Thus, the whole 8, shown in figure 1, comprises for forming of this particular embodiment of an element according to the invention, a core 1 of open cell synthetic foam, which beforehand has been impregnated by a liquid comprising NCO-groups, and which on both sides of that core comprises a reinforcement layer 2 respectively 2', which can for example be constituted of a mat in glass fiber, a protection foil of thermoplastic synthetic material 3 on the reinforcement layer 2, on the side of the core 1 which is oriented towards the visible surface of the element, and finally a finishing layer 4 respectively 4' applied on each side of those reinforcement layers 2 and 2', which thus form the outer layers of the element.

It has also to be mentioned, because figure 1 concerns a schematical representation in cross-section, that the relative thickness of the different layers are not necessarily represented at the correct scale ratio.

In figure 2 a vertical cross-section of a mould 5 constituted of two parts is schematically represented in its open position, which mould is mounted in a not shown press.

That press comprises two mould parts 6 and 7 which can be moved with respect to each other and between which the whole 8 of the different superimposed layers is brought.

The mould part 6 is constituted of a hollow body wherein, steam is blown via openings 9, as indicated by the arrows 9', which steam then leaves that mould part along a series of small holes 10, which are regularly distributed over the mould surface 11 of the latter.

The mould part 7 is also constituted of a hollow body whereby in the mould surface 12 thereof a number of small holes 13 are present, which are also regularly distributed in an analogous way as is the case in the mould surface 11 of the mould part 6.

Openings 14 are provided in the side of the mould part 7 which is situated at the other side with respect to that surface 12, which openings are connected on a not represented vacuumpump, which pump allows to suck an excess of steam, after the latter has crossed the whole 8 of the different layers.

That press is advantageously used for the application of the hereabove described fifth and sixth step according to the invention.

With the mould of the press in its open position, as represented in figure 2, the whole of the superimposed layers is put between the mould parts 6 and 7 with the layer 4, which has to form the visible surface, on the mould surface 12 of the mould part 7. The mould is thereafter closed by bringing the mould parts 6 and 7 towards each other, so that a well defined shape can be given to the whole 8 of superimposed layers. Thereafter steam is brought in the mould part 6 via the openings 9, while at the same time the vacuumpump is activated. This has as consequences that the steam will penetrate through the small holes 10 into the whole 8 which is pressed between the mould parts 6 and 7. Due to this, the steam will first penetrate via the small holes 10 through the porous layers 4' and 2' to the core 1 and a fast reaction will occur between the NCO-groups and the steam. Thereafter or possibly during this reaction, the synthetic foil 3 will melt which has as a consequence that the steam will further penetrate through the finishing layer 4 and will be sucked via the small holes 13 in the mould part 7. In this way the whole 8 of superimposed layers is completely and in a nearly homogeneous way crossed by the steam and a reaction will occur between the NCO-groups and the steam for forming a solid synthetic foam core. That reaction also provides that the reinforcement layer shows a very good adhesion with the core. Due to the fact that this was flexible before the reaction, care can be taken that this reinforcement layer partially penetrates into the core 1 during the compression of the mould 5 constituted of two parts.

It is important to note that the synthetic foil originally prevents the further penetration of the steam into the finishing layer 4 and this until the reaction with the NCO-groups has sufficiently progressed. Only after all risks of bleeding through of the impregnation liquid from the core 1 into the finishing layer are excluded, the synthetic foil 3 is nearly completely brought to melting and the excess of steam can thus further penetrate into that finishing layer 4 and can then be sucked via the openings 13 of the mould part 7.

Further the synthetic foil 3 which has been brought to melt takes care that the finishing layer 4, also thanks to the applied pressure, shows a good adhesion with the reinforcement layer 2 and eventually with the core 1.

As soon as the reaction between the steam and the NCO-groups is finished, the mould is opened and the thus formed solid element can be taken away from the mould.

In an advantageous way, a flexible synthetic foam can be provided between the protection layer, which is formed by a synthetic foil 3, and the finishing layer 4. That flexible synthetic foam is preferably fixed beforehand at the other side of the finishing layer, for example by flame laminations or other gluing techniques.

In order to realize a fast reaction between the NCO-groups and the steam before the melting of the synthetic foil 3, use is made in an advantageous way of the steam or overheated steam at low pressure, generally maximum 10 bar, until a temperature of 120 to 400°C and preferably of 120 to 160°C. In that way, a bleeding through of that liquid towards the finishing layer is avoided.

The protection foil 3 generally consists of polyethylene, polypropylene or a copolymer of ethylene and propylene.

Good results were obtained by using a core of substantially open cell flexible polyurethane foam on the basis of polyisocyanate and polyether, hereafter called polyether foam, which is at least partially impregnated with a mixture comprising an isocyanate which preferably comprises trichloromethane.

This isocyanate can for example consist of a diphenylmethane-4,4'-diisocyanate monomer which comprises low polymers, such as dimers and trimers and other derivatives and is known under the name "crude MDI".

In figure 3 the two mould parts 6 and 7 were represented in closed state, contrary to what is the case.

That figure however represents an embodiment of a method according to the invention which is distinguished from the one illustrated in figure 2 by the fact that use is made of a finishing layer, which is not only steam-proof but also obtains, on its own during the process, in the mould a certain shape and a good solidness. The use of a protection layer 3 is thus no longer necessary. In that embodiment the excess of steam is not taken away via the mould part 7 but via the outer walls of the mould.

In an alternative of that embodiment, the small holes 13 in the mould part 7 could be omitted. In order to avoid that the steam leaves the press via the outer walls of the mould, the mould part 6 could further be subdivided into two chambers 6a and 6b by means of a dividing wall 17, whereby in one of the chambers 6a steam could be blowed in and in the other chamber 6b steam could be sucked.

In certain cases, there could also be provided a synthetic foil 3 even on the side of the synthetic foam layer which is provided to be oriented towards the body. That layer will then mainly play the role of adhesion layer. In any case, the steam is generally applied on the side of the whole of superimposed layers, which side is destined to be mounted at a non visible part, in such a manner that the steam will first come into contact with the impregnated synthetic foam and only thereafter with the protection layer between the latter and the finishing layer.

Although an element obtained according to the invention can in principle show different shapes and can be provided for the most different applications, the method according to the invention can in particular be applied for the manufacturing of roof coverings, door panels, door mats, and the like for use in automobiles.

For further illustration of the invention, some specific examples will be given hereunder.

### Example 1

This examples relates to the manufacturing of a roof covering for automobiles.

Hereby there is started from a sheet 1 of open cell flexible polyether foam having a density of 15 kg per cubic meter and a thickness of 6 mm. That foam was in a first step impregnated with so-called "crude MDI", diluted with trichloroethane (80 % MDI, 20 % trichloroethane). The absorption by that flexible foam of that mixture comprising NCO-groups has been adjusted in such a manner as to obtain a final density of 25 kg per cubic meter.

On both sides of that sheet constituted of polyether foam a reinforcement layer 2 and 2' was applied in the form of a glass membrane with a weight of 150 g/m². On one of those reinforcement layers 2 a polyethylene foil 3 of 30 micrometers was thereafter applied, with as purpose to avoid the bleeding through of liquid chemicals towards the textile fabric 4 provided as finishing layer on the visible side. At the side which is provided to be applied against the bodywork a light polyester stack membrane 4' of 50 gr/m² was applied as finishing layer, which at the same time also fixes the glass fibres of the layer 2', in order to easen the manipulation of the final product.

The whole was then brought into a mould, such as represented in figure 2, and in a way described hereabove. After closing the mould the isocyanate was transformed into a hard polyurea by the injection of steam in such a manner that after demoulding the element remained in the same shape as obtained in the press.

At the side of the fabric 4, just before the closing of the mould, a steam push was given in order to relax the fabric and thus obtain a better shape without folds.

The temperature of the applied steam was comprised between 140 and 150°C.

### Example 2

This example relates to the manufacturing of a door panel for automobiles and trucks. In that example use was again made of a flexible open cell polyether foam 1, this time with a density of 18 kg/m³ and a thickness of 15 mm. This foam was impregnated with a solution of prepolymer on the basis of "crude MDI" and a reactive polyol, in such a manner that after impregnation a semi-hard but however tenacious material is obtained. More particularly that prepolymer was made of 100 parts "crude MDI", 50 parts polyol with a molecular weight of 6,000 and a functionality of 3, with a rest NCO of 20 %. This was then diluted so that finally a mixture of 80 % prepolymer and 20 % trichloroethane was obtained.

At one side of the thus impregnated polyether foam plate a glass mat 2' of 600 g/m² was applied. On the opposite side, which forms the interior side, a decorative layer 4 was applied after having first applied a polyethylene foil 3, which decorative layer 4 consists of synthetic leather applied on a flexible synthetic foam layer as underground.

Due to the fact that this synthetic leather is nearly steam-proof, use was made of a press having two chambers 6a and 6b divided by means of a dividing wall 17, corresponding with the mould part 6 shown in the figure 2. This is represented in figure 2 by means of a broken line. The steam was inputted in one of these chambers 6a in order to penetrate by means of holes provided in the latter into the side of the element which is opposite to the synthetic leather layer of the element and was thereafter sucked, as indicated by the arrows 16, in another room 6a of the same mould part. The other mould part does not show such holes and thus serves only as support for the element. Thanks to the presence of a polyethylene foil there was prevented that this prepolymer should penetrate into the under side of the synthetic leather, so that the latter remains flexible.

The prepolymer was so chosen that after treatment with steam a semi-hard polyurea foam was obtained which has permanently taken the shape of the mould in the press. Further the thus obtained panel shows very good shock- absorbing properties.

### Example 3

Use can be made of NCO-groups comprising mixture with polyols , softeners, solvents and inhibitors which temporarily block the reaction between the polyols and the NCO-groups in such a manner that an excess of free NCO-groups remains present at the moment steam is added.

That example relates to the manufacturing of floor mats for automobiles, which consists of the same type of layers as represented in figure 3. Hereby there is started from a sheet 1 of flexible open cell polyether foam with a density of 15 kg/cm² and a thickness of 35 mm. This polyether foam plate 1 was impregnated with a mixture on the basis of "crude MDI", so that finally a foam with a density of 30 kg/m² was obtained, of which the hardness ranges between 4 and 6 kPa (CDH 40 %). This was obtained by making use of a mixture which consists of 100 parts of "crude MDI" plus 100 parts of a polyol with a molecular weight of 4,000 and a functionality of 2, 50 parts softener dibutylphthalate and 50 parts Thermolin 101 (Olin). Thereto 100 parts softener dibutylphthalate have been added.

For forming the floor plates in question, use was further made of a press, as represented in figure 3. On the under mould of the press, which thus consists of the mould part 7, a heavy mass of 4 to 5 kg/m² was applied which was constituted of EVA-EPDM polymer mixture (ethylvinylacetate-ethylene-propylene-diene terpolymer) with 70 % by weight barium sulphate known as heavy spar. That heavy layer 4 was first heated and then formed on the under mould, via vacuum shaping. Thereafter the impregnated foam 1 was put on top of that mass. On the layer situated at the opposite side of the heavy mass a light polyester stack membrane 4' of 50 gr/m² was applied on the thus impregnated foam.

The purpose of that reaction was to reinforce the flexible open cell polyether foam which was used as core 1, and to give it a remaining deformation and a good fixing to the heavy mass and to assure the polyester membrane. After closing the mould overheated steam at a temperature of 150 to 180°C was injected in the upper mould, in particular in the mould part 6. That steam penetrated via the small holes 13 through the polyester stack membrane into the open cell foam for thereafter leave the mould along the outer walls, as indicated by arrows 15. In that example the foam layer remains relatively flexible, even after the reaction of the prepolymer with the steam. The time of the action of the steam was 15 seconds. Thus the total production cycle remained under two minutes.

The invention is in no way limited to the embodiments described hereabove and within the scope of the invention several modifications could be applied, i.e. for what it concerns the different used layers, which a.o. is determined by the destination of the element to be formed.

Thus for example use can be made of polyamide or polyester foils as protection foil 3, for example in function of the kind of the outer finishing layer, more particularly of the used type of textile.

Also instead of thermoplastic foil as protection layer, use can be made of a foil which can be dissolved in steam or of a material that decomposes starting from a certain temperature and on the same moment becomes permeable to steam. Material which can be solved in the presence of steam is for example polyvinyl alcohol, which is a polymer soluble in water.

Further that finishing layer can be constituted of a stack membrane, knitting stuff and even not permeable materials, as is actually the case in example 3. A finishing layer of plastic, hardboard, Woodstock (G.O.R.), metal, wood, or a skin of polyurethane or any other elastomer formed by spraying.

Important however is that at least one of the sides of the whole constituted of several layers comprises at least one side which is permeable for steam, possibly after the melting of one of the layers in such a manner that this can be brought into contact with the considered NCO-groups with which the core is at least partially impregnated.

As demoulding agent, such as described in example 3, use can for example be made of a "Teflon" film.

For some applications, the synthetic foam forming the core can for example be partially moistened, for example only superficially, with a liquid comprising NCO-groups, in such a manner that, in that case, the part of the core situated in the middle remains unmodified during the shaping. This can for example be the case when use is made of a relatively thick synthetic foam plate as core.

Further, as becomes clear from example 3, the meltable synthetic foil can possibly be omitted, for example when there is no risk of bleeding through towards the finishing layer. This is among others the case when this one is totally impermeable for chemicals, more particularly for the liquid comprising NCO-groups.

In some elements manufactured according to the method of the invention, the plastic core can remain relatively flexible, as is the case in example 3. This is especially valid when one of the layers consists of a relatively rigid material of which the shape remains after the shaping in the press.

The used steam can be as well saturated as overheated.

If the impregnation liquid for the foam layer also comprises polyol, the type of the latter can be so chosen that for the preparation of for example a prepolymer on the basis of diphenylmethane-4,4'-diisocyanate and/or derivatives of the latter, the reaction product after the treatment with the steam results in flexible, semi-hard or hard impregnated elements starting from a flexible foam layer.

Preferably, use is made of solvents which are not very volatile and especially of water for preparing said NCO-groups comprising liquid.

## Claims

1. A method for manufacturing an element having a synthetic foam layer, which is covered on at least one side thereof by a finishing layer, in which method
- a layer (1) of substantially flexible mainly open cell synthetic foam is at least partially impregnated with a liquid comprising NCO-groups ;
- said impregnated layer (1) and said finishing layer (4,4') are superimposed one upon the other ;
- the superimposed layers are compressed ; and
- in this compressed state, steam is introduced at least into said impregnated layer, at such a temperature and for a sufficient time so that said NCO-groups of said liquid react with said steam,
characterized in that
a protection foil (3), which is substantially impermeable for the liquid comprising NCO-groups, is applied between the synthetic foam layer (1) and the finishing layer (4,4'), before introducing the steam into the impregnated layer, which protection foil becomes steam-permeable by the action thereupon of the steam, said steam being introduced in the impregnated layer (1) towards said protection foil on the side of the impregnated layer (1) opposite said protection foil.

2. A method as claimed in claim 1, characterized in that for said finishing layer (4,4') use is made of a steam permeable layer composed of fibers.

3. A method as claimed in one of the claims 1 or 2, characterized in that a reinforcement layer (2,2'), constituted of for example glass fibers, is applied on the synthetic foam (1).

4. A method as claimed in one of the claims 1 to 3, characterized in that said whole (8) of different superimposed layers (1, 2, 2', 4, 4') is submitted to a shaping and/or lamination during or before said steam acts thereupon.

5. A method as claimed in one of the claims 1 to 4, characterized in that use is made of a thermoplastic synthetic foil (3) which can at least partially melt by action thereupon of the steam.

6. A method as claimed in one of the claims 1 to 5, characterized in that use is made of a protection foil (3) which is modified by the action of the steam into a steam permeable adhesive layer allowing the surrounding layers (1,2,2',4,') to stick to each other.

7. A method as claimed in one of the claims 1 to 6, characterized in that steam is used at a temperature comprised between 120 and 400°C, preferably between 120 and 160°C.

8. A method as claimed in claim 7, characterized in that overheated steam at low pressure is used at a temperature ranging between 120 and 160°C.

9. A method as claimed in one of the claims 1 to 8, characterized in that, under the finishing layer (4,4'), a layer of flexible synthetic foam is applied.

10. A method as claimed in one of the claims 1 to 9, characterized in that use is made of a liquid comprising NCO-groups in such a concentration that the latter provides a nearly shape retaining structure by the reaction of the steam with the layer of nearly flexible synthetic foam (1).

11. A method as claimed in one of the claims 1 to 10, characterized in that use is made of a layer of a nearly shape retaining material which is compressed with the impregnated synthetic foam layer (1).

12. A method as claimed in one of the claims 1 to 11, characterized in that use is made of a layer (1) from a substantially open cell flexible polyether foam and that the latter is at least partially impregnated with an isocyanate solution.

13. A method as claimed in one of the claims 1 to 12, characterized in that the synthetic foam (1) is at least partially impregnated with a diphenylmethane-4,4'-diisocyanate and/or derivatives thereof.

14. A method as claimed in one of the claims 1 to 13, characterized in that the synthetic foam (1) is at least partially impregnated with a prepolymer on the basis of diphenylmethane-4,4'-diisocyanate and/or derivat ives thereof.

15. A method as claimed in one of the claims 1 to 14, characterized in that use is made of a NCO-groups comprising mixture with polyols , softeners, solvents and inhibitors which temporarily block the reaction between the polyols and the NCO-groups in such a manner that an excess of free NCO-groups remains present at the moment steam is added.

## Patentansprüche

1. Verfahren zum Herstellen eines Elementes, das eine Kunststoffschaum-Schicht aufweist, welche mindestens auf einer Seite mit einer Deckschicht bedeckt ist, bei welchem Verfahren
- eine Schicht (1) aus im wesentlichen flexiblem hauptsächlich offenzelligem Kunststoffschaum zumindest teilweise mit einer NCO-Gruppen aufweisenden Flüssigkeit imprägniert wird;
- die imprägnierte Schicht (1) und die Deckschicht (4, 4') übereinander gelegt werden;
- die übereinander gelegten Schichten komprimiert werden; und
- in diesem komprimierten Zustand zumindest in die imprägnierte Schicht Dampf eingeführt wird, wobei dies bei einer solchen Temperatur und über eine ausreichend lange Zeitspanne hinweg erfolgt, so daß die NCO-Gruppen der Flüssigkeit mit dem Dampf reagieren,
dadurch gekennzeichnet, daß
eine Schutzfolie (3), die im wesentlichen für die NCO-Gruppen aufweisende Flüssigkeit undurchdringbar ist, zwischen der Kunststoffschaumschicht (1) und der Deckschicht (4, 4') aufgebracht wird, bevor der Dampf in die imprägnierte Schicht eingeführt wird, wobei die Schutzfolie durch die Einwirkung des Dampfes dampfdurchlässig wird und der Dampf in der imprägnierten Schicht (1) in Richtung auf die Schutzfolie auf der Seite der imprägnierten Schicht (1), die der Schutzfolie abgewandt ist, eingeführt wird.

2. Verfahren nach Anspruch 1, dadurch gekennzeichnet, daß für die Deckschicht (4, 4') eine dampfdurchlässige Schicht aus Fasern verwendet wird.

3. Verfahren nach einem der Ansprüche 1 oder 2, dadurch gekennzeichnet, daß eine Verstärkungsschicht (2, 2'), die z.B. aus Glasfasern gebildet ist, auf den Kunststoffschaum (1) aufgetragen wird.

4. Verfahren nach einem der Ansprüche 1 bis 3, dadurch gekennzeichnet, daß die Gesamtheit (8) der verschiedenen überlagerten Schichten (1, 2, 2', 4, 4') während oder bevor der Dampf auf diese einwirkt einer Formung und/oder Laminierung unterzogen wird.

5. Verfahren nach einem der Ansprüche 1 bis 4, dadurch gekennzeichnet, daß eine thermoplastische Kunststoffolie (3) verwendet wird, die zumindestens teilweise durch die Einwirkung des Dampfes schmelzen kann.

6. Verfahren nach einem der Ansprüche 1 bis 5, dadurch gekennzeichnet, daß eine Schutzfolie (3) verwendet wird, die durch die Einwirkung des Dampfes in eine dampfdurchlässige Haftschicht modifiziert wird, die es ermöglicht, daß die umliegenden Schichten (1, 2, 2', 4') aneinander haften.

7. Verfahren nach einem der Ansprüche 1 bis 6, dadurch gekennzeichnet, daß Dampf von einer Temperatur von zwischen 120 und 400°C, vorzugsweise von zwischen 120 und 160°C verwendet wird.

8. Verfahren nach Anspruch 7, dadurch gekennzeichnet, daß überhitzter Dampf von niedrigem Druck bei einer Temperatur von zwischen 120 und 160°C verwendet wird.

9. Verfahren nach einem der Ansprüche 1 bis 8, dadurch gekennzeichnet, daß unter der Deckschicht (4, 4') eine Schicht aus flexiblem Kunststoffschaum aufgebracht wird.

10. Verfahren nach einem der Ansprüche 1 bis 9, dadurch gekennzeichnet, daß eine NCO-Gruppen enthaltende Flüssigkeit in einer solchen Konzentration verwendet wird, daß diese durch die Reaktion des Dampfes mit der Schicht aus beinahe flexiblem Kunststoffschaum (1) eine beinahe formstabile Struktur bereitstellt.

11. Verfahren nach einem der Ansprüche 1 bis 10, dadurch gekennzeichnet, daß eine Schicht aus einem beinahe formstabilen Material verwendet wird, die mit der imprägnierten Kunststoffschaumschicht (1) komprimiert wird.

12. Verfahren nach einen der Ansprüche 1 bis 11, dadurch gekennzeichnet, daß eine Schicht (1) aus einem im wesentlichen offenzelligen flexiblen Polyether-Schaum verwendet wird und daß der letztere zumindest teilweise mit einer Isocyanat-Lösung imprägniert wird.

13. Verfahren nach einem der Ansprüche 1 bis 12, dadurch gekennzeichnet, daß der Kunststoffschaum (1) zumindest teilweise mit einem Diphenylmethan-4,4'-Diisocyanat und/oder Derivaten davon imprägniert wird.

14. Verfahren nach einem der Ansprüche 1 bis 13, dadurch gekennzeichnet, daß der Kunststoffschaum (1) zumindest teilweise mit einem Prepolymer auf der Basis von Diphenylmethan-4,4'-Diisocyanat und/oder Derivaten davon imprägniert wird.

15. Verfahren nach eine der Ansprüche 1 bis 14, dadurch gekennzeichnet, daß eine NCO-Gruppen enthaltende Mischung mit Polyolen, Weichmachern, Lösungsmitteln und Inhibitoren, die vorübergehend die Reaktion zwischen den Polyolen und den NCO-Gruppen derart blockieren, daß ein Überschuß von freien NCO-Gruppen in dem Augenblick vorhanden ist, wenn Dampf hinzugefügt wird, verwendet wird.

## Revendications

1. Procédé de fabrication d'un élément comportant une couche de mousse synthétique, qui est recouverte sur au moins une de ses faces d'une couche de finissage, procédé dans lequel :
- une couche (1) de mousse synthétique principalement à cellules ouvertes essentiellement flexible est au moins partiellement imprégnée d'un liquide comprenant des groupes NCO;
- la couche imprégnée (1) et la couche de finissage (4, 4') sont superposées l'une sur l'autre;
- les couches superposées sont comprimées; et
- dans cet état comprimé, de la vapeur est introduite au moins dans la couche imprégnée, à une température telle et pendant un temps suffisant pour que les groupes NCO dudit liquide réagissent avec la vapeur,
caractérisé en ce qu'une feuille de protection (3), qui est essentiellement imperméable pour le liquide comprenant des groupes NCO, est appliquée entre la couche de mousse synthétique (1) et la couche de finissage (4, 4'), avant l'introduction de la vapeur dans la couche imprégnée, laquelle feuille de protection devient perméable à la vapeur par l'action sur celle-ci de la vapeur, ladite vapeur étant introduite dans la couche imprégnée (1) vers la feuille de protection du côté de la couche imprégnée (1) opposé à ladite feuille de protection.

2. Procédé suivant la revendication 1, caractérisé en ce que pour la feuille de finissage (4, 4') utilisation est faite d'une couche composée de fibres perméable à la vapeur.

3. Procédé suivant l'une ou l'autre des revendications 1 et 2, caractérisé en ce qu'une couche de renforcement (2, 2'), constituée par exemple de fibres de verre, est appliquée sur la mousse synthétique (1).

4. Procédé suivant l'une quelconque des revendications 1 à 3, caractérisé en ce que la totalité (8) des différentes couches superposées (1, 2, 2', 4, 4') est soumise à un façonnage et/ou une stratification pendant ou avant que la vapeur n'agisse sur celles-ci.

5. Procédé suivant l'une quelconque des revendications 1 à 4, caractérisé en ce que utilisation est faite d'une feuille synthétique thermoplastique (3) qui peut être au moins partiellement fondue par l'action sur celle-ci de la vapeur.

6. Procédé suivant l'une quelconque des revendications 1 à 5, caractérisé en ce que utilisation est faite d'une feuille de protection (3) qui est modifiée par l'action de la vapeur en une couche adhésive perméable à la vapeur faisant coller les couches environnantes (1, 2, 2', 4') l'une à l'autre.

7. Procédé suivant l'une quelconque des revendications 1 à 6, caractérisé en ce qu'on utilise de la vapeur à une température comprise entre 120 et 400°C, avantageusement entre 120 et 160°C.

8. Procédé suivant la revendication 7, caractérisé en ce qu'on utilise de la vapeur surchauffée à basse pression à une température se situant entre 120 et 160°C.

9. Procédé suivant l'une quelconque des revendications 1 à 8, caractérisé en ce que, sous la couche de finissage (4, 4'), est appliquée une couche de mousse synthétique flexible.

10. Procédé suivant l'une quelconque des revendications 1 à 9, caractérisé en ce que utilisation est faite d'un liquide comprenant des groupes NCO en une concentration telle que celui-ci confère une structure conservant presque sa forme par la réaction de la vapeur avec la couche de mousse synthétique presque flexible (1).

11. Procédé suivant l'une quelconque des revendications 1 à 10, caractérisé en ce que utilisation est faite d'une couche d'une matière conservant presque sa forme qui est comprimée avec la couche de mousse synthétique imprégnée (1).

12. Procédé suivant l'une quelconque des revendications 1 à 11, caractérisé en ce que utilisation est faite d'une couche (1) d'une mousse de polyéther flexible essentiellement à cellules ouvertes et en ce que celle-ci est au moins partiellement imprégnée d'une solution d'isocyanate.

13. Procédé suivant l'une quelconque des revendications 1 à 12, caractérisé en ce que la mousse synthétique (1) est au moins partiellement imprégnée d'un diphénylméthane-4,4'-diisocyanate et/ou de ses dérivés.

14. Procédé suivant l'une quelconque des revendications 1 à 13, caractérisé en ce que la mousse synthétique (1) est au moins partiellement imprégnée d'un prépolymère à base de diphénylméthane-4,4'-diisocyanate et/ou de ses dérivés.

15. Procédé suivant l'une quelconque des revendications 1 à 14, caractérisé en ce que utilisation est faite d'un mélange comprenant des groupes NCO avec des polyols, des plastifiants, des solvants et des inhibiteurs qui bloquent temporairement la réaction entre les polyols et les groupes NCO d'une manière telle qu'un excès de groupes NCO libres reste présent au moment où la vapeur est ajoutée.
